# EUROPÄISCHE PATENTSCHRIFT

(11) **EP 2 507 504 B1**
(45) Veröffentlichungstag und Bekanntmachung des Hinweises auf die Patenterteilung: **09.09.2015**
(21) Anmeldenummer: 10773001.2
(22) Anmeldetag: 13.10.2010
(51) Int. Cl.: F02M 59/36, F02M 63/00, F04B 53/00, F16K 47/04

(54) **SCHALTVENTIL, INSBESONDERE ZUR ZUMESSUNG EINES FLUIDS FÜR EINE STROMABWÄRTS ANGEORDNETE FÖRDERPUMPE**
CONTROL VALVE PARTICULARLY FOR METERING A FLUID TO A DELIVERY PUMP ARRANGED DOWNSTREAM
SOUPAPE DE COMMANDE EN PARTICULIER POUR LE DOSAGE D'UN FLUIDE A UNE POMPE D'ALIMENTATION SITUÉE EN AVAL

(30) Priorität: 01.12.2009 DE 102009047326; 24.08.2010 DE 102010039691
(43) Veröffentlichungstag der Anmeldung: 10.10.2012
(60) Teilanmeldung: 15174143.6
(73) Patentinhaber: Robert Bosch GmbH, 70442 Stuttgart (DE)
(72) Erfinder: THORWIRTH, Erik, 70178 Stuttgart (DE); ECKART, Winfried, 71636 Ludwigsburg (DE); BRUNNER, Dominik, 70563 Stuttgart (DE); HEINEN, Christian, 70771 Leinfelden-Echterdingen (DE)
(86) Internationale Anmeldenummer: PCT/EP2010/065320
(87) Internationale Veröffentlichungsnummer: WO 2011/067026

(56) Entgegenhaltungen:
- EP-A1- 1 471 248
- DE-A1- 19 834 121
- DE-A1- 19 900 883
- DE-A1-102007 028 960
- US-A1- 2008 237 518

## Beschreibung

### Stand der Technik

Die Erfindung betrifft ein Schaltventil nach dem Oberbegriff des Anspruchs 1.

Schaltventile, insbesondere zur Zumessung eines Fluids für eine stromabwärts angeordnete Förderpumpe, sind vom Markt her bekannt. Beispielsweise werden sie in Common-Rail-Kraftstoffsystemen von Kraftfahrzeugen als Mengensteuerventil eingesetzt, um den von einer Hochdruckförderpumpe in das Common Rail geförderten Kraftstoffstrom zu steuern. Solche Mengensteuerventile können als elektromagnetische Schaltventile ausgeführt sein, wobei ein Elektromagnet und eine Feder auf ein Ventilelement des Schaltventils einwirken. Beispielhaft wird auf DE 198 34 121 A1 verwiesen. Ferner offenbaren US 2008/0237518 A1 und EP 1 471 248 A1 gattungsgemäße Schaltventile.

### Offenbarung der Erfindung.

Das der Erfindung zugrunde liegende Problem wird durch ein Schaltventil nach Anspruch 1 gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Das erfindungsgemäße Schaltventil hat den Vorteil, dass Strömungskräfte am Ventilelement bei in Öffnungsrichtung betätigtem Schaltventil reduziert werden, ohne dass die Robustheit des Schaltventils verringert wird. Dadurch kann auch die Anregung akustischer Wellen verringert werden. Außerdem kann der Druckverlust, der beim Durchströmen des Schaltventils mit einem Fluid entsteht, vermindert werden.

Beispielsweise arbeitet ein Schaltventil, welches als ein Mengensteuerventil zur Zumessung einer Kraftstoffmenge für eine Kolben-Hochdruckförderpumpe einer Brennkraftmaschine eingesetzt wird, wie folgt:
In einer Saugphase der Hochdruckförderpumpe wird das in einem Strömungskanal angeordnete Ventilelement, das beispielsweise als Ventilplatte ausgeführt ist, in Folge von über das Ventilelement hinweg auftretenden Druckunterschieden in eine geöffnete Stellung gebracht, wie bei einem normalen druckdifferenzbetätigten Einlassventil, entsprechend beispielsweise DE 198 34 121 A1. Diese Offenstellung des Schaltventils kann durch eine elektromagnetisch betätigte Ventilnadel unterstützt werden. Wenn in einem anschließenden Förderhub der Hochdruckförderpumpe sich die Druckverhältnisse umkehren, dann kann durch die Wirkung der Ventilnadel auf das Ventilelement das Schaltventil vorübergehend weiterhin in Öffnungsstellung betätigt bleiben. In dieser Phase findet eine teilweise Rückströmung des bereits in der Hochdruckförderpumpe befindlichen Kraftstoffs statt. Das Schaltventil wird dabei entgegen seiner "normalen" Durchströmrichtung von dem Kraftstoff durchströmt. Dabei führt der rückströmende Kraftstoff - ohne die erfindungsgemäße Maßnahme - zu einem Druck auf eine axiale Stirnfläche des Ventilelements. Dieser Druck muss durch die Wirkung der Ventilnadel wenigstens zeitweise kompensiert werden.

Die Erfindung geht von der Überlegung aus, dass der Druck, welcher während der Rückströmung auf die axiale Stirnfläche des Ventilelements wirkt, durch eine Abschirmung vermindert werden kann. Damit kann die von der Ventilnadel bereitzustellende Betätigungskraft vermindert und ein Elektromagnet des Schaltventils schwächer ausgelegt werden. Ebenso kann die Anschlagsgeschwindigkeit der Ventilnadel bzw. des Ventilelements an einem ihre Bewegung begrenzenden Anschlag vermindert sein. Auf diese Weise wird das Schaltventil auch verbilligt, und es arbeitet leiser.

Die Abschirmung ist dabei vorzugsweise so angeordnet, dass sie die axiale Stirnfläche des Ventilelements im Wesentlichen von dem rückströmenden Kraftstoff abschirmt, jedoch selbst nur unwesentlich den rückströmenden Kraftstoff behindert. Beispielsweise ist das Ventilelement als Ventilplatte ausgeführt, um welche der rückströmende Kraftstoff mittels der Abschirmung verlustarm herumgeführt wird. Die Ventilplatte weist zwei axiale Endlagen auf. Erstens einen Ruhesitz, an welchem die Ventilplatte anschlägt, wenn das Schaltventil geschlossen ist, und zweitens einen Anschlag für eine Offenstellung des Schaltventils. In dieser Offenstellung ist die Ventilplatte in den meisten Anwendungsfällen sehr dicht an der Abschirmung angeordnet. Dabei kann sie die Abschirmung entweder berühren, oder es bleibt ein Spalt, namentlich eine Engstelle zwischen der Ventilplatte und der Abschirmung geöffnet. Diese Engstelle stellt jedoch nicht die Flussrichtung des Kraftstoffs dar, sondern bildet - in einigen Ausgestaltungen der Erfindung - eine Art Kanal zu einem mit Kraftstoff gefüllten, jedoch im Wesentlichen nicht durchströmten Bereich, wie weiter unten noch erläutert werden wird. Der Anschlag für die Offenstellung des Schaltventils ist nicht zwingend erforderlich.

Erfindungsgemäß umfasst das Schaltventil einen Kanal, welcher einen außerhalb der Abschirmung gelegenen Strömungsbereich, in dem bei einer Rückströmung ein vergleichsweise geringer statischer Druck herrscht, mit einem innerhalb der Abschirmung liegenden Bereich verbindet. Vorzugsweise ist der Kanal im Wesentlichen orthogonal zu der Rückströmung ausgerichtet. Weiterhin kann der Kanal verschiedenartig ausgeführt sein und/oder an verschiedenen und nahezu beliebigen Abschnitten des Strömungskanals angeordnet sein. Er verläuft jedoch parallel zu einer Mittellinie des Schaltventils. Dadurch kann die elektromagnetische Betätigungseinrichtung, welche die Ventilnadel bewegt, kleiner bauen. Folglich kann der Leistungsbedarf des Elektromagneten weiter gesenkt werden und es wird weniger Wärme erzeugt, beispielsweise in der Ankerwicklung.

Der Kanal wird mindestens bereichsweise durch einen vorzugsweise radial umlaufenden Spalt zwischen dem Ventilelement und der Abschirmung oder dem Abschirmabschnitt gebildet. Der umlaufende Spalt bzw. der Kanal wird beispielsweise dann gebildet, wenn sich das Ventilelement in seiner Öffnungsstellung befindet. Dabei werden die Elemente des Schaltventils so bemessen, dass sich der Saugstrahleffekt in einer gewünschten Stärke und Richtung ergibt, ohne dass ein separater Kanal hergestellt werden muss. Auf diese Weise kann der Kanal besonders einfach und kostengünstig realisiert werden.

Das Schaltventil baut einfacher, wenn die Abschirmung einen umlaufenden und beispielsweise ringförmigen Abschirmabschnitt umfasst. Damit ergibt sich eine einfache konstruktive Ausgestaltung der Abschirmung. Diese ist fast immer in einem Mengensteuerventil einsetzbar und gegebenenfalls auch bei bestehenden Ausgestaltungen ohne konstruktive Änderungen einsetzbar. Dadurch wird das Schaltventil vereinfacht und seine Herstellung verbilligt.

Eine Ausgestaltung des Schaltventils sieht vor, dass der Abschirmabschnitt konisch ist. Damit kann das Schaltventil so ausgelegt werden, dass die Strömungsverluste des fließenden Kraftstoffes besonders deutlich verringert sind. Dies betrifft sowohl die Förderrichtung als auch die Rückströmung.

Ergänzend wird vorgeschlagen, dass die Abschirmung oder wenigstens der Abschirmabschnitt ein Blechformteil ist. Ein solches Blechformteil ist besonders leicht herstellbar und billig.

Die Öffnung des Kanals kann verschiedenartige Querschnittsformen aufweisen. Damit ergibt sich eine Vielzahl von Möglichkeiten, um den innerhalb der Abschirmung liegenden Bereich mit dem Strömungskanal fluidisch zu verbinden, so dass sich - angepasst an eine jeweilige Bauform des Schaltventils - der gewünschte Saugstrahleffekt ergibt.

Eine weitere Ausgestaltung des Schaltventils sieht vor, dass der Kanal mindestens bereichsweise durch mindestens eine Öffnung in dem Ventilelement gebildet wird. Beispielsweise weist das Ventilelement eine im Wesentlichen rotationssymmetrische und scheibenförmige Geometrie auf, wobei die durch den Strömungskanal fließende Strömung bzw. Rückströmung eine axiale Fläche des Ventilelements wenigstens abschnittsweise radial umströmt. In diesem Fall kann der Kanal durch axiale Öffnungen in dem Ventilelement gebildet werden, vorzugsweise durch eine Reihe von Öffnungen in der Nähe des Randes des Ventilelements. Diese Ausgestaltung weist den Vorteil auf, dass längs des Strömungskanals keine zusätzliche Drosselstelle erforderlich ist, wodurch in der Saugrichtung entsprechende Drosselverluste vermieden werden.

Eine nochmals weitere Ausgestaltung des Schaltventils sieht vor, dass der außerhalb der Abschirmung liegende Strömungsbereich, in den der Kanal mündet, so geformt ist, dass die Rückströmung umgelenkt wird. Dadurch mündet der Kanal in den radial inneren Bereich der gekrümmten Strömung, in welchem sich ein Druckgradient in radialer Richtung einstellen kann. Somit ergibt sich in dem radial inneren Strömungsbereich ein vergleichsweise niedriger Druck, der sich mittels des Kanals auf den innerhalb der Abschirmung liegenden Bereich übertragen kann. Damit wird eine weitere vorteilhafte Alternative des Schaltventils gebildet.

Das erfindungsgemäße Schaltventil arbeitet besonders gut, wenn die Rückströmung im Wesentlichen orthogonal zu dem Kanal geführt wird. Dadurch wird unter anderem erreicht, dass die Funktion des Kanals im Wesentlichen unabhängig von der Strömungsrichtung in dem Strömungskanal ist, so dass bei einem Wechsel der Strömungsrichtung im Wesentlichen keine oder nur eine vergleichsweise geringe Umverteilung von Fluid durch den Kanal stattfindet. Dadurch können hydraulische Verluste vermieden werden.

Das Schaltventil baut besonders einfach, wenn mindestens einige Elemente des Schaltventils, insbesondere Ventilnadel, Ventilelement und/oder Abschirmung, eine im Wesentlichen rotationssymmetrische Form aufweisen. Eine rotationssymmetrische Form stellt eine für ein Schaltventil besonders günstige Ausführung dar, wobei die erfindungsgemäße Abschirmung ebenfalls gut an diese Form angepasst werden kann. Entsprechend weisen auch die Strömungen im Bereich des Schaltventils, insbesondere im Bereich der Ventilplatte, ein im Wesentlichen rotationssymmetrisches Verhalten auf.

Das Schaltventil ist besonders vorteilhaft anzuwenden, wenn es ein Mengensteuerventil zur Zumessung von Kraftstoff in einem Kraftstoffsystem einer Brennkraftmaschine ist. Hierbei sind die Arbeitsfrequenz des Schaltventils sowie die auftretenden Drücke und die herrschenden Druckunterschiede besonders hoch. Für solche und ähnliche Betriebsbedingungen ist das erfindungsgemäße Schaltventil vorteilhaft geeignet.

Nachfolgend werden beispielhafte Ausführungsformen der Erfindung unter Bezugnahme auf die Zeichnung erläutert. In der Zeichnung zeigen:
- Figur 1: eine Übersichtsdarstellung eines Kraftstoffsystems mit einer Hochdruckpumpe, einem Common-Rail-System und einem Mengensteuerventil;
- Figur 2: ein Schaltventil, nicht Gegenstand der Erfindung in einer Schnittdarstellung mit einer Darstellung von Strömungsgeschwindigkeiten;
- Figur 3: ein Schaltventil in einer Schnittdarstellung mit einer Darstellung von Strömungsgeschwindigkeiten;
- Figur 4: ein Schaltventil nach Figur 3 mit einer Darstellung einer statischen Druckverteilung;
- Figur 5: ein Schattventil, nicht Gegenstand der Erfindung in einer Schnittdarstellung mit einer Darstellung einer statischen Druckverteilung;
- Figur 6: ein Schattventil, nicht Gegenstand der Erfindung in einer Schnittdarstellung mit einer Darstellung einer statischen Druckverteilung;
- Figur 7: ein Schaltventil, nicht Gegenstand der Erfindung in einer Schnittdarstellung mit einer Darstellung einer statischen Druckverteilung; und
- Figur 8: ein Schaltventil, nicht Gegenstand der Erfindung in einer Schnittdarstellung mit einer Darstellung einer statischen Druckverteilung.

Es werden für funktionsäquivalente Elemente und Größen in allen Figuren auch bei unterschiedlichen Ausführungsformen die gleichen Bezugszeichen verwendet.

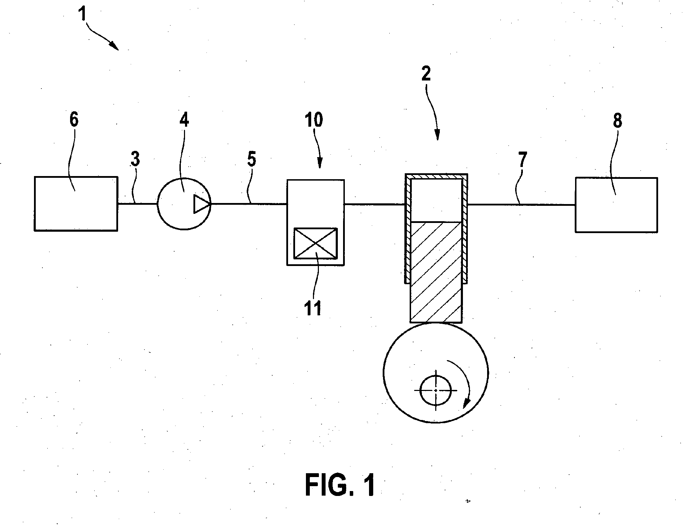

Figur 1 zeigt ein Kraftstoffsystem 1 einer Brennkraftmaschine in einer stark vereinfachten Darstellung. Eine (nicht näher erläuterte) und als Kolbenpumpe ausgebildete Hochdruckpumpe 2 ist stromaufwärts über eine Saugleitung 3, eine Vorförderpumpe 4 und eine Niederdruckleitung 5 mit einem Kraftstofftank 6 verbunden. Stromabwärts ist an die Hochdruckpumpe 2 über eine Hochdruckleitung 7 ein Hochdruckspeicher 8 ("Common Rail") angeschlossen. Ein als Mengensteuerventil ausgebildetes Schaltventil 10 mit einer elektromagnetischen Betätigungseinrichtung 11 - im Folgenden als ein Elektromagnet 11 bezeichnet - ist hydraulisch zwischen der Niederdruckleitung 5 und der Hochdruckpumpe 2 angeordnet und bildet deren Einlassventil. Sonstige Elemente, wie beispielsweise das Auslassventil der Hochdruckpumpe 2, sind in der Figur 1 nicht gezeichnet. Es versteht sich, dass das Mengensteuerventil 10 als Baueinheit mit der Hochdruckpumpe 2 ausgebildet sein kann.

Beim Betrieb des Kraftstoffsystems 1 fördert die Vorförderpumpe 4 Kraftstoff vom Kraftstofftank 6 in die Niederdruckleitung 5. Dabei bestimmt das Mengensteuerventil 10 die von der Hochdruckpumpe 2 dem Hochdruckspeicher 8 zugeführte Kraftstoffmenge, indem es während eines Förderhubs zeitweise zwangsweise offen bleibt.

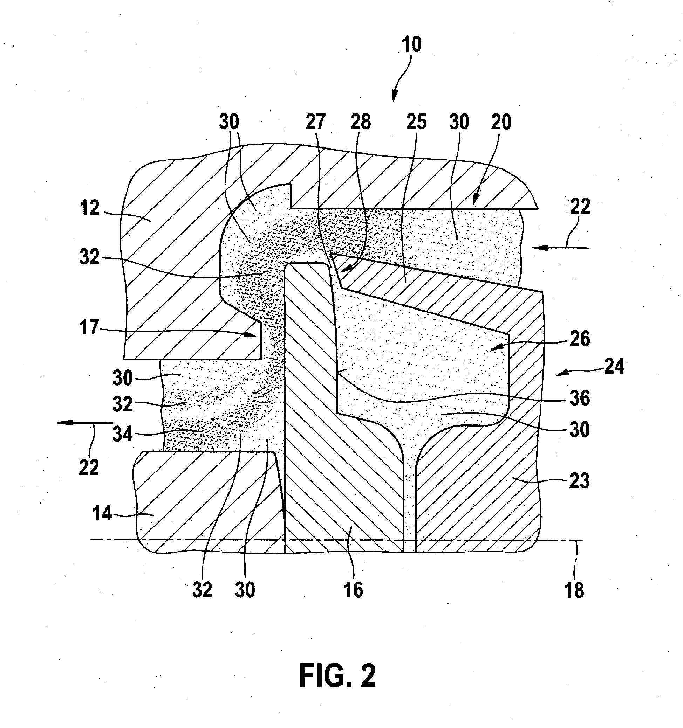

Figur 2 zeigt einen Abschnitt des Mengensteuerventils 10 auf der Saugseite der Hochdruckpumpe 2. Man erkennt, dass das Mengensteuerventil 10 ein Gehäuse 12, eine Ventilnadel 14, ein plattenförmiges Ventilelement 16, einen mit diesem zusammenarbeitenden Ventilsitz 17 ("Ruhesitz") und eine Abschirmung 24 umfasst. In Bezug auf die Zeichnung ist die Hochdruckpumpe 2 rechts des Schaltventils 10 und die von der Vorförderpumpe 4 kommende Niederdruckleitung 5 links angeordnet. Ein Strömungskanal 20 befindet sich im oberen bzw. mittleren Bereich der Figur 2 und weist einen in Bezug auf die Zeichnung im Wesentlichen horizontalen Durchlass für den Kraftstoff auf. Der Strömungskanal 20 weist in seinem Verlauf unterschiedliche Querschnittsformen und Querschnittsflächen auf.

Die Abschirmung 24 umfasst einen Zentralabschnitt 23 und einen ringförmigen Abschirmabschnitt 25, welcher vorliegend konisch ausgebildet ist und bereichsweise eine radial innere Wandung des zumindest an dieser Stelle ringförmigen Strömungskanals 20 bildet. Es ist vorstellbar, die Abschirmung 24 auch als ein Blechformteil herzustellen. Dies ist in der Figur 1 jedoch nicht dargestellt. Ein radial innerhalb der Abschirmung 24 vorhandener Bereich 26 bildet vorliegend einen "Fluidraum" und wird von der Abschirmung 24 mit dem Abschirmabschnitt 25 und dem Zentralabschnitt 23, sowie dem Ventilelement 16 umschlossen. Der Bereich 26 ist mit Kraftstoff gefüllt und mit dem Strömungskanal 20 über eine Engstelle 27, welche auch noch bei in Öffnungsstellung befindlichem Ventilelement 16, wie in Figur 2 dargestellt, zwischen dem Ventilelement 16 und dem Abschirmabschnitt 25 gebildet ist, verbunden. Die Engstelle 27 ist in der Figur 2 als ein radial umlaufender Spalt ausgeführt und bildet zugleich einen Kanal 28.

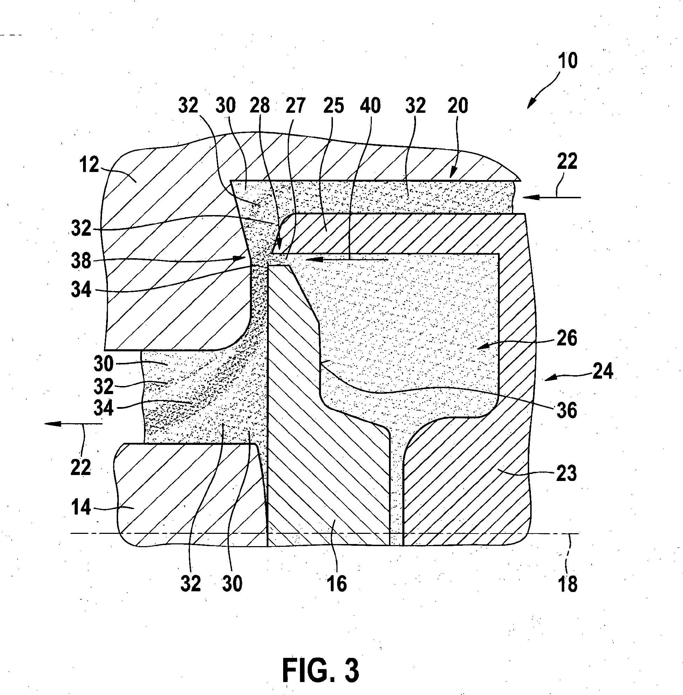

Die Elemente des Schaltventils 10 weisen vorliegend eine im Wesentlichen rotationssymmetrische Form um eine Mittellinie 18 auf. In der Zeichnung ist nur eine Hälfte einer Schnittansicht abgebildet. Dies gilt auch für die weiter unten beschriebenen Figuren 3 bis 8.

Die Schnittdarstellung der Figur 2 - sowie der weiter unten beschriebenen Figuren 3 bis 8 - entspricht einem Simulationsmodell zur Berechnung von Strömungsgeschwindigkeiten bzw. Druckverteilungen und zeigt vorliegend keinen Anschlag für die Ventilnadel 14 oder das Ventilelement 16 für die Offenstellung des Schaltventils 10. Ein solcher Anschlag könnte beispielsweise mittels einer radialsymmetrischen Ausformung des Zentralabschnitts 23 geschaffen werden, so dass das Ventilelement 16 in der gezeigten Offenstellung unmittelbar auf dem Zentralabschnitt 23 der Abschirmung 24 aufsitzen kann. Ebenso kann im Bereich 26 eine (nicht dargestellte) Schraubenfeder untergebracht sein, welche das Ventilelement 16 in Richtung der Schließstellung beaufschlagt. Beides ist aber keineswegs zwingend notwendig.

Die Darstellung der Figur 2 entspricht - wie oben erwähnt - einem in Öffnungsstellung befindlichen Schalt- bzw. Mengensteuerventil 10. Der Ruhesitz 17 kennzeichnet eine nicht näher erläuterte Schließstellung des Ventilelements 16. Die Ventilnadel 14 und das Ventilelement 16 sind axial bewegbar und befinden sich in einer in Bezug auf die Zeichnung äußersten rechten Stellung. Die Abschirmung 24 ist gehäusefest angeordnet.

Die Hochdruckpumpe 2 mit dem Mengensteuerventil 10 arbeiten folgendermaßen: In einer Saugphase der Hochdruckpumpe 2 wird Kraftstoff in der Zeichnung von links nach rechts gefördert. Dies entspricht der "normalen" Fließrichtung durch das Schaltventil 10. Dabei entspricht die Funktion des Mengensteuerventils 10 im Wesentlichen jener eines normalen, federbeaufschlagten Einlass-Saugventils, wie es bei Kolbenpumpen üblich und bekannt ist. In einer anschließenden Förderphase wird in der Hochdruckpumpe 2 ein Kraftstoffdruck aufgebaut. Dadurch strömt ein Teil des zuvor angesaugten Kraftstoffs in Richtung der Pfeile 22 zurück (Rückströmung), solange das Ventilelement 16 sich zwangsweise, aufgrund der Beaufschlagung durch die Ventilnadel 14, welche wiederum durch die elektromagnetische Betätigungseinrichtung 11 in diese Position gebracht wird, in der dargestellten geöffneten Stellung befindet.

Im Strömungskanal 20 entstehen vor allem während der gerade beschriebenen Rückströmung als Folge hydraulischer Effekte unterschiedliche Strömungsgeschwindigkeiten des rückströmenden Kraftstoffs. Die unterschiedlichen Strömungsgeschwindigkeiten sind in der Zeichnung der Figur 2 durch unterschiedliche Schwärzungen dargestellt. Es gibt Bereiche relativ niedriger Strömungsgeschwindigkeiten 30, mittlerer Strömungsgeschwindigkeiten 32 und relativ hoher Strömungsgeschwindigkeiten 34. Weitere in der Zeichnung der Figur 2 vorhandene Schattierungsgrade und damit verbundene Strömungsgeschwindigkeiten sind ohne Bezugszeichen dargestellt. Dabei bedeuten gleiche Schwärzungsgrade der Schattierungen nicht unbedingt auch gleiche Strömungsgeschwindigkeiten. Als Folge der vorliegenden Schwarz-Weiß-Darstellung ist die Zeichnung der Figur 2 nicht überall umkehrbar eindeutig. Vereinfacht und verallgemeinert ist festzustellen, dass Bereiche relativ hoher Strömungsgeschwindigkeiten überwiegend nahe der Mitte eines jeweiligen Querschnitts des Strömungskanals 20 vorliegen.

Man erkennt, dass die durch die Pfeile 22 bezeichnete Rückströmung durch die Wirkung der Abschirmung 24 bzw. des Abschirmabschnitts 25 im Wesentlichen von einer axialen Stirnfläche 36 des Ventilelements 16 fern bleibt. Die Strömung wird also um das Ventilelement 16 herum gelenkt. Dadurch ist der auf die axiale Stirnfläche 36 einwirkende Druck des Kraftstoffs vergleichsweise klein. Der Druckverlust beim Durchgang des Kraftstoffs durch den Strömungskanal 20 ist insgesamt vergleichsweise gering.

Figur 3 zeigt ein Schaltventil 10, wobei das Gehäuse 12, das Ventilelement 16, die Abschirmung 24 und der Abschirmabschnitt 25 eine von der Figur 2 abweichende Geometrie aufweisen. Ebenso sind die Geometrien des Strömungskanals 20, der Engstelle 27, des Kanals 28 und des mit Kraftstoff gefüllten Bereichs 26 verschieden. Insbesondere weist der Strömungskanal 20 im Bereich der Engstelle 27 bzw. des Kanals 28 eine Drosselstelle 38 auf, welche den Querschnitt für die Rückströmung verengt. Dargestellt sind ähnlich zur Figur 2 die Strömungsgeschwindigkeiten des Fluids bzw. Kraftstoffs. Entsprechend gelten die oben genannten Einschränkungen hinsichtlich der zeichnerischen Darstellung.

Die grundsätzliche Funktion des Schaltventils 10 nach Figur 3 ist zu der von Figur 2 vergleichbar, jedoch sind die Strömungsgeschwindigkeiten und die hydraulischen Effekte und Drücke als Folge der abweichenden Geometrien stellenweise unterschiedlich. Insbesondere weist der Bereich der Drosselstelle 38 im Vergleich zu den übrigen Abschnitten des Strömungskanals 20 eine höhere Fluidgeschwindigkeit auf. Dies hat zur Folge, dass ein statischer Druck des Kraftstoffs im Bereich der Engstelle 27 vergleichsweise niedrig ist. Somit entsteht in Richtung eines Pfeils 40 eine Saugwirkung auf den im Bereich 26 befindlichen Kraftstoff. In der Folge vermindert sich der hydraulische Druck im Bereich 26, und entsprechend vermindert sich die auf die axiale Stirnfläche 36 des Ventilelements 16 wirkende axiale Kraft. Insgesamt wird die axiale Stirnfläche 36 damit auf eine zweifache Weise entlastet. Zum einen durch die Wirkung des Abschirmabschnitts 25, welcher die Rückströmung im Wesentlichen von der axialen Stirnfläche 36 fern hält. Zum andern durch die Saugwirkung und der damit verbundenen Minderung des hydraulischen Drucks im Bereich 26. Ähnlich zur Ausführung des Schaltventils 10 nach Figur 2 ist der Druckverlust beim Durchgang des Kraftstoffs durch den Strömungskanal 20 vergleichsweise gering.

Anders als in der Figur 2 "umgreift" der Abschirmabschnitt 25 das Ventilelement 16 in radialer Richtung, und entsprechend ist der Kanal 28 bezüglich der Mittellinie 18 anders, nämlich im Wesentlichen axial ausgerichtet. Für das Zustandekommen des Saugstrahleffekts ist dies wenig erheblich, solange die Strömungsgeschwindigkeiten der Rückströmung im Bereich der Drosselstelle 38 genügend hoch sind.

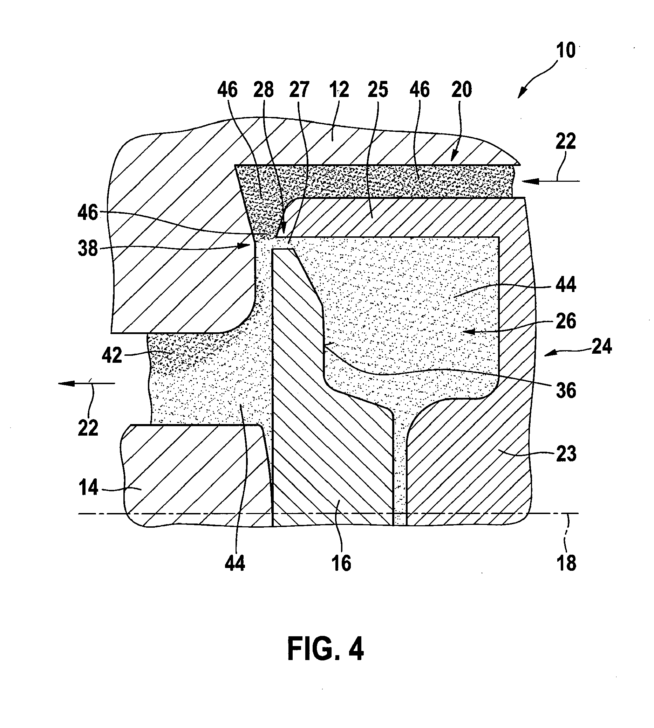

Figur 4 zeigt ein Schaltventil 10 nach der Figur 3 mit einer Darstellung einer statischen Druckverteilung des strömenden Kraftstoffs an Stelle von Strömungsgeschwindigkeiten. Hinsichtlich der zeichnerischen Darstellung gelten die in der Beschreibung zur Figur 2 genannten Einschränkungen sinngemäß. Die äußeren (hydraulischen) Betriebsbedingungen des Schaltventils 10 der Figur 4 entsprechen denen der Figur 3. In einem in der Zeichnung der Figur 4 oberen Abschnitt des Strömungskanals 20 besteht ein relativ hoher Druck 46, in einem Bereich links unten sowie in dem Bereich 26 besteht ein mittlerer Druck 44 und in einem Bereich links in der Zeichnung besteht ein relativ niedriger Druck 42. Es versteht sich, dass der "mittleren Druck 44" nicht zwingend einen genauen Mittelwert des relativ hohen Drucks 46 und des relativ niedrigen Drucks 42 beschreibt, sondern beispielsweise wesentlich darunter liegen kann.

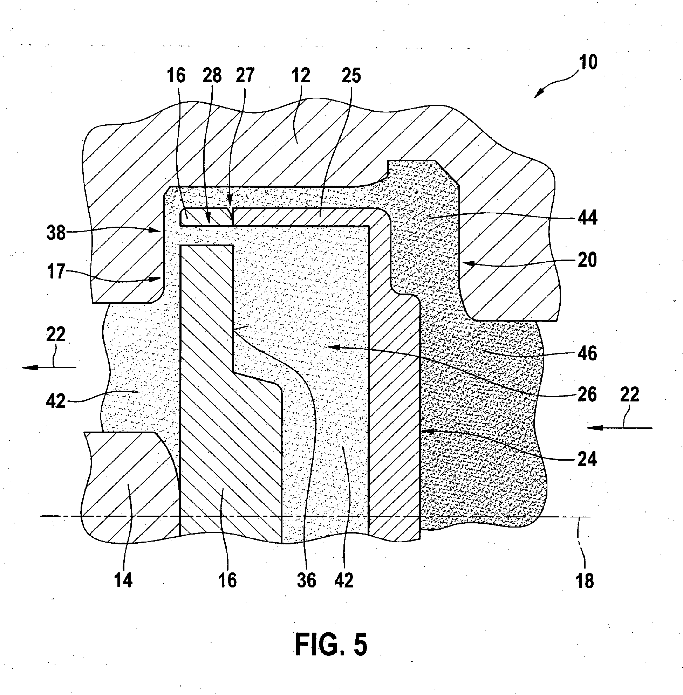

Nachfolgend werden mit den Figuren 5 bis 8 weitere statische Druckverteilungen während der Rückströmung des Fluids in weiteren Ausführungsformen des Schaltventils 10 vorgestellt. Ähnlich zu den Figuren 2 bis 4 sind diese im Wesentlichen rotationssymmetrisch ausgeführt. Hinsichtlich der zeichnerischen Darstellung gelten die in der Beschreibung zur Figur 2 genannten Einschränkungen sinngemäß. Allen Figuren 5 bis 8 ist gemeinsam, dass im rechten Teil der Zeichnungen - anders als in den Figuren 2 bis 4 - auch weitere Bereiche des Strömungskanals 20 mit teilweise radial verlaufenden Strömungen sichtbar sind.

Die grundsätzliche Funktion des Schaltventils 10 nach den Figuren 5 bis 8 ist zu denen der Figuren 3 und 4 vergleichbar, das heißt, neben der Wirkung der Abschirmung 24 bzw des Abschirmabschnitts 25 ergibt sich zusätzlich eine Saugwirkung mittels des Kanals 28. Dabei sind die Strömungsgeschwindigkeiten und die hydraulischen Effekte und Drücke als Folge der abweichenden Geometrien teilweise unterschiedlich. Ähnlich zu den Figuren 2 bis 4 ist der Druckverlust beim Durchgang des Kraftstoffs durch den Strömungskanal 20 jeweils vergleichsweise gering.

Weiterhin ist den Ausführungsformen nach den Figuren 5 bis 8 gemein, dass der Abschirmabschnitt 25 zusätzlich einen Anschlag für das Ventilelement 16 bildet, jeweils in Bezug auf die Zeichnungen nach rechts. Dadurch findet eine Hubbegrenzung des Ventilelements 16 statt. Die in den Figuren 2 bis 4 bezeichnete Engstelle 27 wird in den Figuren 5 bis 8 zu einem eventuell verbleibenden Restspalt 27. Der Restspalt 27 kann gegebenenfalls zu kleinen Leckagen des Bereichs 26 führen, was jedoch durch die Wirkung des Kanals 28 ausgeglichen werden kann.

Figur 5 zeigt ein Schaltventil 10, wobei das Gehäuse 12, das Ventilelement 16, die Abschirmung 24 und der Abschirmabschnitt 25 eine von den Figuren 2 und 3 abweichende Geometrie aufweisen. Ebenso sind die Geometrien des Strömungskanals 20, des Kanals 28 und des mit Kraftstoff gefüllten Bereichs 26 verschieden. Der Restspalt 27 entsteht in der Figur 5 an einem Anschlag des Ventilelements 16 an dem Abschirmabschnitt 25 und ist in dem in der Zeichnung dargestellten Zustand fluidisch unwirksam.

Der Kanal 28 wird vorliegend durch eine Reihe von axialen Öffnungen - beispielsweise Bohrungen - in der Nähe des Randes des Ventilelements 16 gebildet, von denen in der Schnittansicht der Figur 5 nur eine sichtbar ist. Die Drosselstelle 38 befindet sich im Bereich des Ruhesitzes 17 des Ventilelements 16 und in einer Umgebung des Kanals 28, welcher - ähnlich zu den übrigen Figuren 2 bis 8 - im Wesentlichen orthogonal zu der Rückströmung ausgerichtet ist.

Längs des Strömungskanals 20 ergibt sich in der Figur 5 in der Rückströmrichtung 22 eine Druckminderung von einem relativ hohen Druck 46 über einen mittleren Druck 44 zu einem relativ niedrigen Druck 42 im linken Teil der Zeichnung. Im Bereich 26 herrscht ein relativ niedriger Druck 42. Ähnlich zur Figur 2 oder 3 ist der Druckverlust beim Durchgang des Kraftstoffs durch den Strömungskanal 20 insgesamt vergleichsweise gering. Da der Kanal 28 in den Bereich 42 mit hoher Strömungsgeschwindigkeit und somit relativ niedrigem statischem Druck mündet, ergibt sich wieder die bereits oben beschriebene Saugwirkung, die zu einer Druckminderung im Bereich 26 führt.

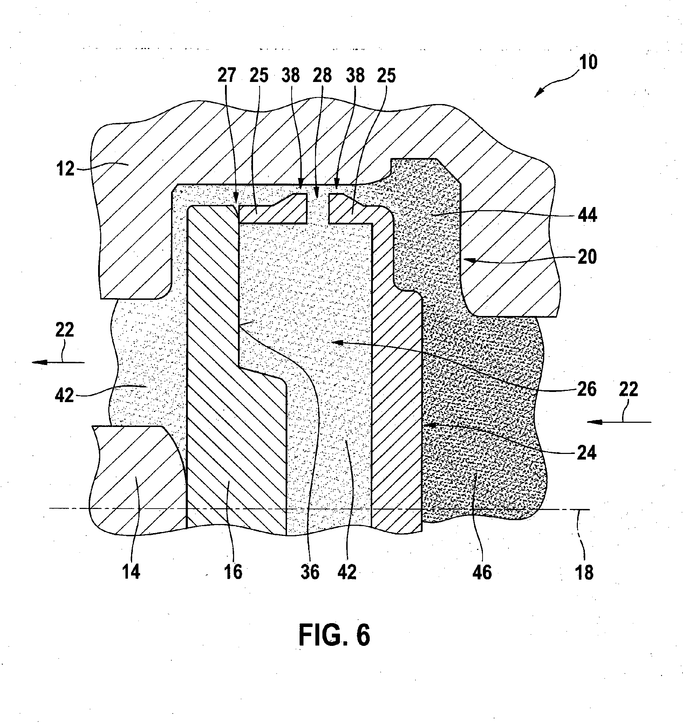

Figur 6 zeigt ein Schaltventil 10, wobei der Kanal 28 durch den Abschirmabschnitt 25 hindurch radial nach außen in den Kanal 20 geführt ist. Die Drosselstelle 38 wird vorliegend durch zwei umlaufende nasenartige Ausformungen (Bezugszeichen 38) des Abschirmabschnitts 25 gebildet. Die dargestellte Druckverteilung ist - mit Ausnahme der Umgebung der Drosselstelle 38 - zu der Figur 5 in etwa vergleichbar, siehe dazu die Bezugszeichen 42, 44 und 46 in der Zeichnung. Da der Kanal 28 in den Bereich der Drosselstelle 38 mit hoher Strömungsgeschwindigkeit und somit relativ niedrigem statischem Druck mündet, ergibt sich wieder die bereits oben beschriebene Saugwirkung, die zu einer Druckminderung im Bereich 26 führt.

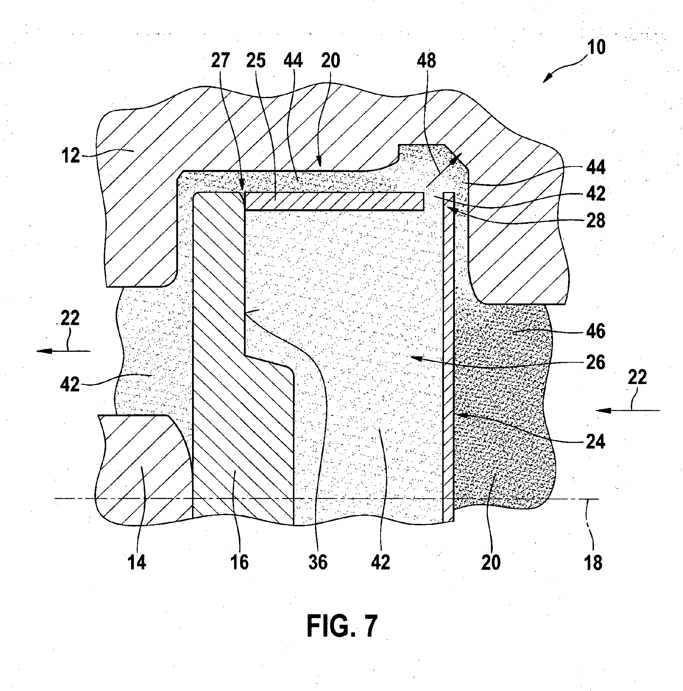

Figur 7 zeigt ein Schaltventil 10, wobei in einem Strömungsbereich rechts oben in der Zeichnung die Rückströmung in etwa rechtwinklig umgelenkt wird. Dabei mündet der Kanal 28 in den radial inneren Bereich der gekrümmten Strömung, in welchem sich daher ein Druckgradient in radialer Richtung einstellen kann. Dies wird in der Zeichnung durch einen Pfeil 48 veranschaulicht. Somit ergibt sich in dem radial inneren Strömungsbereich ein vergleichsweise niedriger Druck, der sich mittels des Kanals 28 in den innerhalb der Abschirmung 24 liegenden Bereich 26 fortsetzt.

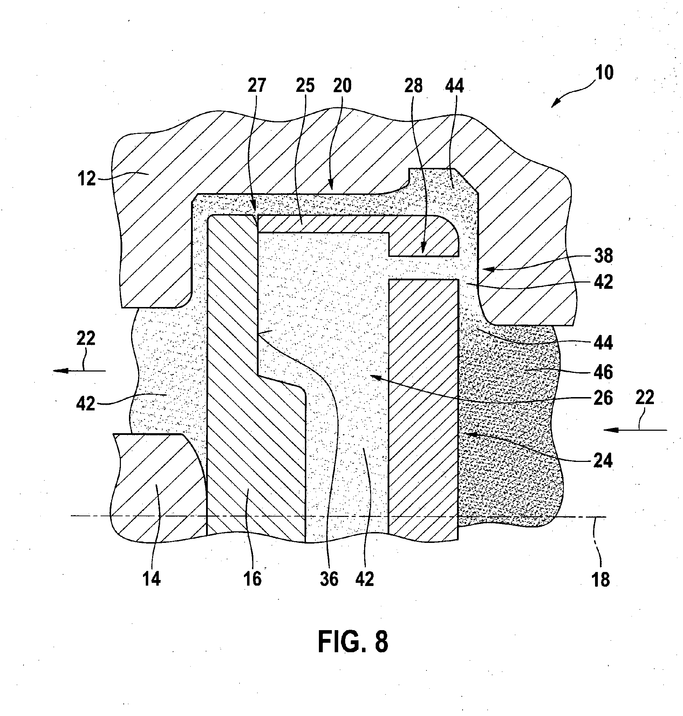

Figur 8 zeigt ein Schaltventil 10, wobei der Kanal 28 durch eine bzw. mehrere axial gerichtete Öffnung(en) der Abschirmung 24 gebildet ist. Die Funktion ist analog zu den anderen Ausführungsformen.

## Patentansprüche

1. Schaltventil (10), insbesondere zur Zumessung eines Fluids für eine stromabwärts angeordnete Förderpumpe (2), mit einem Strömungskanal (20), einer axial bewegbaren Ventilnadel (14), einem von der Ventilnadel (14) in einer Öffnungsrichtung beaufschlagbaren und in dem Strömungskanal (20) angeordneten Ventilelement (16), wobei der Strömungskanal (20) bei von der Ventilnadel (14) in Öffnungsrichtung betätigtem Ventilelement (16) wenigstens vorübergehend entgegen der Öffnungsrichtung des Ventilelements (16) von dem Fluid durchströmt werden kann (Rückströmung), wobei der Strömungskanal (20) in Rückströmrichtung (22) gesehen stromaufwärts von dem Ventilelement (16) eine fluidisch wirksame Abschirmung (24) aufweist, welche die Rückströmung von einer Fläche (36) des Ventilelements (16) mindestens teilweise fern hält, **dadurch gekennzeichnet, dass** es mindestens einen Kanal (28) umfasst, welcher einen außerhalb der Abschirmung (24) gelegenen Strömungsbereich, in dem bei einer Rückströmung ein vergleichsweise geringer statischer Druck herrscht, mit einem innerhalb der Abschirmung (24) liegenden Bereich (26) verbindet, und der Kanal (28) sich parallel zu einer Mittellinie (18) des Schaltventils (10) erstreckt und mindestens bereichsweise durch einen Spalt zwischen dem Ventilelement (16) und der Abschirmung (24) oder dem Abschirmabschnitt (25) gebildet wird.

2. Schaltventil (10) nach Anspruch 1, **dadurch gekennzeichnet, dass** die Abschirmung (24) einen umlaufenden Abschirmabschnitt (25) umfasst.

3. Schaltventil (10) nach Anspruch 2, **dadurch gekennzeichnet, dass** der Abschirmabschnitt (25) konisch ist.

4. Schaltventil (10) nach einem der Ansprüche 2 oder 3, **dadurch gekennzeichnet, dass** die Abschirmung (24) oder wenigstens der Abschirmabschnitt (25) ein Blechformteil ist.

5. Schaltventil (10) nach einem der vohergehenden Ansprüche, **dadurch gekennzeichnet, dass** die Rückströmung im Wesentlichen orthogonal zu dem Kanal (28) geführt wird.

6. Schaltventil (10) nach wenigstens einem der vorhergehenden Ansprüche, **dadurch gekennzeichnet, dass** mindestens einige Elemente des Schaltventils (10), insbesondere Ventilnadel (14), Ventilelement (16) und/oder Abschirmung (24), eine im Wesentlichen rotationssymmetrische Form aufweisen.

7. Schaltventil (10) nach wenigstens einem der vorhergehenden Ansprüche, **dadurch gekennzeichnet, dass** das Schaltventil (10) ein Mengensteuerventil zur Zumessung von Kraftstoff in einem Kraftstoffsystem (1) einer Brennkraftmaschine ist.

8. Förderpumpe (2), insbesondere Kraftstoffpumpe für ein Common-Rail-Kraftstoffsystem (1) einer Brennkraftmaschine, mit einem Mengensteuerventil, insbesondere an Stelle eines Einlassventils, **dadurch gekennzeichnet, dass** das Mengensteuerventil als ein Schaltventil (10) nach einem der vorhergehenden Ansprüche ausgebildet ist.

## Claims

1. Switching valve (10), in particular for the metering of a fluid for a delivery pump (2) arranged downstream, having a flow duct (20), having an axially movable valve needle (14), having a valve element (16) which can be acted on by the valve needle (14) in an opening direction and which is arranged in the flow duct (20), wherein, when the valve element (16) is actuated in the opening direction by the valve needle (14), the flow duct (20) can at least temporarily be flowed through by the fluid counter to the opening direction of the valve element (16) (return flow), wherein the flow duct (20) has, upstream of the valve element (16) as viewed in the return flow direction (22), a fluidically active shield (24) which at least partially keeps the return flow away from a surface (36) of the valve element (16), **characterized in that** said switching valve comprises at least one duct (28) which connects a flow region situated outside the shield (24), in which flow region a relatively low static pressure prevails in the presence of a return flow, to a region (26) situated within the shield (24), and the duct (28) extends parallel to a central line (18) of the switching valve (10) and is formed at least regionally by a gap between the valve element (16) and the shield (24) or the shield section (25).

2. Switching valve (10) according to Claim 1, **characterized in that** the shield (24) comprises an encircling shield section (25).

3. Switching valve (10) according to Claim 2, **characterized in that** the shield section (25) is conical.

4. Switching valve (10) according to either of Claims 2 and 3, **characterized in that** the shield (24) or at least the shield section (25) is a sheet-metal moulded part.

5. Switching valve (10) according to one of the preceding claims, **characterized in that** the return flow is conducted substantially orthogonally with respect to the duct (28).

6. Switching valve (10) according to at least one of the preceding claims, **characterized in that** at least some elements of the switching valve (10), in particular valve needle (14), valve element (16) and/or shield (24), are of substantially rotationally symmetrical form.

7. Switching valve (10) according to at least one of the preceding claims, **characterized in that** the switching valve (10) is a flow control valve for the metering of fuel in a fuel system (1) of an internal combustion engine.

8. Delivery pump (2), in particular fuel pump for a common-rail fuel system (1) of an internal combustion engine, having a flow control valve, in particular instead of an inlet valve, **characterized in that** the flow control valve is designed as a switching valve (10) according to one of the preceding claims.

## Revendications

1. Soupape de commande (10), en particulier pour le dosage d'un fluide pour une pompe d'alimentation (2) disposée en aval, comprenant un canal d'écoulement (20), une aiguille de soupape (14) déplaçable axialement, un élément de soupape (16) pouvant être sollicité dans un sens d'ouverture par l'aiguille de soupape (14) et disposé dans le canal d'écoulement (20), le canal d'écoulement (20) pouvant être traversé (reflux) par le fluide au moins temporairement en sens contraire au sens d'ouverture de l'élément de soupape (16) lorsque l'élément de soupape (16) est actionné dans le sens d'ouverture par l'aiguille de soupape (14), le canal d'écoulement (20) comprenant, vu dans le sens de reflux (22), en amont de l'élément de soupape (16), un écran (24) à action fluidique, lequel tient à l'écart au moins partiellement le reflux à partir d'une surface (36) de l'élément de soupape (16), **caractérisée en ce qu'**elle comporte au moins un canal (28), lequel relie une région d'écoulement située à l'extérieur de l'écran (24), dans laquelle règne une pression statique comparativement faible en cas de reflux, à une région (26) se situant à l'intérieur de l'écran (24), et le canal (28) s'étend parallèlement à une ligne médiane (18) de la soupape de commande (10) et est formé au moins par régions par un interstice entre l'élément de soupape (16) et l'écran (24) ou la portion d'écran (25).

2. Soupape de commande (10) selon la revendication 1, **caractérisée en ce que** l'écran (24) comporte une portion d'écran périphérique (25).

3. Soupape de commande (10) selon la revendication 2, **caractérisée en ce que** la portion d'écran (25) est conique.

4. Soupape de commande (10) selon l'une quelconque des revendications 2 ou 3, **caractérisée en ce que** l'écran (24) ou au moins la portion d'écran (25) est une pièce façonnée en tôle.

5. Soupape de commande (10) selon l'une quelconque des revendications précédentes, **caractérisée en ce que** le reflux est guidé essentiellement perpendiculairement au canal (28).

6. Soupape de commande (10) selon au moins l'une quelconque des revendications précédentes, **caractérisée en ce qu'**au moins quelques éléments de la soupape de commande (10), en particulier l'aiguille de soupape (14), l'élément de soupape (16) et/ou l'écran (24), présentent une forme essentiellement à symétrie de révolution.

7. Soupape de commande (10) selon au moins l'une quelconque des revendications précédentes, **caractérisée en ce que** la soupape de commande (10) est une soupape de commande de débit pour le dosage de carburant dans un système de carburant (1) d'un moteur à combustion interne.

8. Pompe d'alimentation (2), en particulier pompe à carburant pour un système de carburant à rampe commune (1) d'un moteur à combustion interne, comprenant une soupape de commande de débit, en particulier à la place d'une soupape d'admission, **caractérisée en ce que** la soupape de commande de débit est réalisée sous la forme d'une soupape de commande (10) selon l'une quelconque des revendications précédentes.
